# EUROPÄISCHE PATENTSCHRIFT

(11) **EP 2 804 108 B1**
(45) Veröffentlichungstag und Bekanntmachung des Hinweises auf die Patenterteilung: **14.12.2016**
(21) Anmeldenummer: 14001660.1
(22) Anmeldetag: 12.05.2014
(51) Int. Cl.: G06F 13/42, F16K 37/00, H02K 3/52

(54) **Stellantrieb mit USB Schnittstelle**
Actuator with USB Interface
Mécanisme de commande avec interface USB

(30) Priorität: 13.05.2013 DE 102013008034
(43) Veröffentlichungstag der Anmeldung: 19.11.2014
(73) Patentinhaber: SIPOS Aktorik GmbH, 90518 Altdorf (DE)
(72) Erfinder: Fichte, Vladimir, 90451 Nürnberg (DE); Raithel, Ulrich, 91052 Erlangen (DE)
(74) Vertreter: Rummler, Felix

(56) Entgegenhaltungen:
- DE-A1-102008 064 406
- GB-A- 2 473 123
- US-A1- 2005 212 475
- US-A1- 2008 222 341
- US-A1- 2010 235 546

## Beschreibung

Die Erfindung betrifft einen Stellantrieb, insbesondere einen elektrischen Stellantrieb, wobei eine USB-Schnittstelle ausgebildet ist, über welche Parameter und/oder Zustandsvariablen des Stellantriebs auslesbar und/oder veränderbar sind.

Stellantriebe werden beispielsweise zur Betätigung von Ventilen in Anlagen eingesetzt. Da eine Vielzahl von unterschiedlichen Ventilen betätigt werden kann, ist es üblich geworden, Parameter zur Betätigung des jeweils angeschlossenen Ventils im Stellantrieb zu hinterlegen. Um eine Überwachung der Funktion und eine Fehlerkontrolle zu ermöglichen, werden Zustandsvariablen des Stellantriebs zum Auslesen bereitgestellt.

Aus US 2005/021475 A1 sind ein Betätiger, eine Motoreinheit und eine Steuerungseinheit bekannt, wobei ein Bedienkommando des Betätigers, das der Steuerungseinheit von einer übergeordneten Steuerung vorgegeben wird, als ein serielles Datensignal an einen Kommunikations-Steuerungsschaltkreis über eine serielle Busleitung übergeben wird.

Aus DE 10 2008 064 406 A1 sind eine Anzeigeeinrichtung für einen Stellantrieb und ein Stellantrieb für eine Armatur bekannt, wobei eine Kommunikationsschnittstelle zur Übertragung und/oder zum Auslesen von Stellungsinformationen an ein Prozessleitsystem und/oder Manufacturing Execution System eingerichtet ist.

Aus GB 2 473 123 A ist eine geräteabhängige Auswahl zwischen Modi asymmetrischer serieller Protokolle bekannt, wobei ein tragbares Kommunikationsgerät mit einem Computer, einem Soundsystem und einer Digitalkamera verbindbar ist.

Aus US 2008/0222341 A1 sind ein Verfahren und eine Vorrichtung zum automatischen Schalten zwischen einem USB-Host und einem USB-Device bekannt, wobei ein Zufallsschalter zum Schalten zwischen einem Host-Modus-Element und einem Device-Modus-Element zu zufälligen Zeiten eingerichtet ist.

Aus US 2010/0235546 A1 sind ein Verfahren und eine Vorrichtung zur adaptiven Zubehörerkennung und Modusverhandlung bekannt, wobei digitale Audiodaten oder digitale Videodaten von einem Smartphone, das als USB-Host agiert, an ein Zubehörteil, beispielsweise niedrigpreisige Audio- und/oder Videogeräte, ausgebbar sind.

Der Erfindung liegt die Aufgabe zugrunde, die Gebrauchseigenschaften eines Stellantriebs zu verbessern.

Zur Lösung dieser Aufgabe sind erfindungsgemäß die Merkmale von Anspruch 1 vorgesehen. Insbesondere wird somit bei einem Stellantrieb der eingangs beschriebenen Art vorgeschlagen, dass an die USB-Schnittstelle eine elektronische Schaltung an-geschlossen ist, die zumindest zwischen einem ersten Modus und einem zweiten Modus schaltbar ist, und dass die elektronische Schaltung an der USB-Schnittstelle im ersten Modus einen USB-Host und im zweiten Modus ein USB-Device bereitstellt. Somit ermöglicht die Erfindung, an die USB-Schnittstelle sowohl ein USB-Device, beispielsweise einen USB-Stick oder einen anderen USB-Massenspeicher oder ein anderes USB-Device, als auch einen USB-Host, beispielsweise einen PC oder einen anderen USB-Host, wahlweise anzuschließen. Es ist bekannt, dass die möglichen USB-Teilnehmer an einem USB (universal serial bus) in zwei Klassen, USB-Hosts und USB-Devices, eingeteilt werden können. Ein USB-Host kann dadurch charakterisiert werden, dass mit dem USB-Host - als Master - der Datenaustausch mit einem USB-Device ansteuerbar ist. Das USB-Device ist dagegen passiv und bedarf einer Ansteuerung durch einen USB-Host, um Daten auszutauschen. Ein USB-Host kann somit auch dadurch charakterisiert werden, dass er einen Master-Controller aufweist und als Master an einer Buskommunikation teilnimmt. Ein USB-Device kann auch dadurch charakterisiert werden, dass es als Slave an einer Buskommunikation teilnimmt. Ein USB-Host ist somit mit mehreren USB-Devices gleichzeitig verbindbar, während ein USB-Device immer nur mit einem USB-Host verbindbar ist, um Daten auszutauschen. Die Ausbildung mehrerer verschiedenartiger USB-Schnittstellen an einem Stellantrieb ist mit der Erfindung verzichtbar. Dies ist bei Stellantrieben besonders von Vorteil, weil jede USB-Schnittstelle notwendig eine Durchbrechung eines Gehäuses des Stellantriebs erfordert. Diese Durchbrechung muss aufwendig abgedichtet werden, um den Stellantrieb in rauen Umgebungen dauerhaft einsetzen zu können. Durch die Doppelfunktion der USB-Schnittstelle ist die Zahl der Durchbrechungen auf eine Mindestanzahl reduzierbar.

Die Anschließbarkeit eines USB-Hosts an die USB-Schnittstelle ermöglicht es, den Stellantrieb mit einem angeschlossen PC zu parametrieren und auszulesen.

Die Anschließbarkeit eines USB-Devices an die USB-Schnittstelle ermöglicht es, Daten von einem USB-Massenspeicher, beispielsweise einem USB-Stick, einzulesen und Daten des Stellantriebs auf diese USB-Massenspeicher zu schreiben. Somit können Daten, beispielsweise Parameter, Zustandsvariablen und Firmware-Programme, von einem Stellantrieb auf einen weiteren erfindungsgemäßen Stellantrieb übertragen werden, ohne dass ein zwischengeschalteter PC erforderlich wäre. Es kann somit auch eine direkte Datenverbindung zwischen den USB-Schnittstellen zweier erfindungsgemäßer Stellantriebe einrichtbar sein.

Die Parameter und/oder Zustandsvariablen sind bevorzugt in einer Speichereinheit des Stellantriebs hinterlegt. Zum Auslesen und Beschreiben der Parameter und/oder Zustandsvariablen kann somit vorgesehen sein, dass die Speichereinheit an die USB-Schnittstelle zum Datenaustausch angeschlossen oder anschließbar ist. Die Zustandsvariablen können Messwerte aber auch Logbucheinträge umfassen.

Bei einer Ausgestaltung der Erfindung kann vorgesehen sein, dass die elektronische Schaltung in einen Mikrocontroller integriert ist. Von Vorteil ist dabei, dass ein kompakter, einfach montierbarer Aufbau des Stellantriebs erreichbar ist.

Bei einer Ausgestaltung der Erfindung kann vorgesehen sein, dass die elektronische Schaltung Widerstände aufweist, die im ersten Modus in einer ersten Beschaltung und im zweiten Modus in einer zweiten Beschaltung mit der USB-Schnittstelle verbunden sind. Von Vorteil ist dabei, dass die unterschiedlichen Beschaltungen, die für USB-Hosts einerseits und USB-Devices andererseits erforderlich sind, aktivierbar sind.

Bei einer Ausgestaltung der Erfindung kann vorgesehen sein, dass eine Detektionseinrichtung ausgebildet ist, mit welcher erkennbar ist, ob außenseitig an die USB-Schnittstelle ein USB-Host oder ein USB-Device angeschlossen ist. Von Vorteil ist dabei, dass eine automatische Umschaltung zwischen dem ersten Modus und dem zweiten Modus in Abhängigkeit von einem Typ - USB-Host oder USB-Device - eines an die USB-Schnittstelle außenseitig angeschlossenen USB-Teilnehmers ausführbar ist. Beispielsweise kann vorgesehen sein, dass die elektronische Schaltung in den ersten Modus wechselt, wenn außenseitig an die USB-Schnittstelle ein USB-Device angeschlossen ist. Es kann auch vorgesehen sein, dass die elektronische Schaltung in den zweiten Modus wechselt, wenn außenseitig an die USB-Schnittstelle ein USB-Host angeschlossen ist.

Bei einer Ausgestaltung der Erfindung kann vorgesehen sein, dass die Detektionseinrichtung zu einer Überwachung eines Spannungspins der USB-Schnittstelle eingerichtet ist. Von Vorteil ist dabei, dass eine einfache Möglichkeit der Detektion eines Typs eines außenseitig angeschlossenen USB-Teilnehmers bereitgestellt ist. Denn ein USB-Host ist dadurch detektierbar, dass am Spannungspin des USB-Teilnehmers eine Versorgungsspannung (beispielsweise 5V) bereitgestellt wird.

Bei einer Ausgestaltung der Erfindung kann vorgesehen sein, dass ein Wechsel zwischen dem ersten Modus und dem zweiten Modus mit der Detektionseinrichtung bewirkbar ist. Von Vorteil ist dabei, dass ein automatischer Wechsel in den jeweils passenden Modus in Abhängigkeit von einem Typ eines außenseitig an die USB-Schnittstelle angeschlossenen USB-Teilnehmers einrichtbar ist. Konfigurationsschritte zur Einrichtung der USB-Schnittstelle sind verzichtbar. Dies verbessert die Gebrauchseigenschaften nochmals.

Bei einer Ausgestaltung der Erfindung kann vorgesehen sein, dass eine Detektionseinrichtung, beispielsweise die bereits erwähnte Detektionseinrichtung, zum zyklischen oder wiederkehrenden Umschalten zwischen dem ersten Modus und dem zweiten Modus, bis eine Kommunikation mit einem außenseitig an der USB-Schnittstelle angeschlossenen USB-Teilnehmer aufgebaut oder zustande gekommen ist, eingerichtet ist. Von Vorteil ist dabei, dass automatisiert im ersten Modus, in welchem ein USB-Host an der USB-Schnittstelle realisiert ist, nach außenseitig angeschlossenen USB-Devices und im zweiten Modus automatisiert nach außenseitig an die USB-Schnittstelle angeschlossenen USB-Hosts gesucht werden kann. Die Detektionseinrichtung kann beispielsweise zum anschließenden Einrichten beziehungsweise Aufbauen einer USB-Kommunikation mit dem detektierten USB-Teilnehmer eingerichtet sein. Besonders günstig ist es, wenn die Detektionseinrichtung als Softwarefunktion, beispielsweise durch geeignete Programmierung, eingerichtet ist. Hierbei kann vorgesehen sein, dass die Detektionseinrichtung im ersten Modus wieder in den zweiten Modus schaltet, wenn die USB-Schnittstelle nicht außenseitig als USB-Device angesprochen wird, und/oder die Detektionseinrichtung aus dem zweiten Modus in den ersten Modus geschaltet wird, wenn die USB-Schnittstelle nicht von außen als USB-Host angesprochen wird.

Bei einer Ausgestaltung der Erfindung kann vorgesehen sein, dass die USB-Schnittstelle als USB-on-the-go-Schnittstelle ausgebildet ist. Eine USB-on-the-go-Schnittstelle kann dadurch charakterisiert werden, dass zumindest eine eingeschränkte Host-Funktionalität bereitgestellt ist. Von Vorteil ist dabei, dass die USB-Schnittstelle zur Detektion eines Typs eines angeschlossenen USB-Teilnehmers verwendbar ist, indem beispielsweise ein ID-Pin der USB-on-the-go-Schnittstelle überwachbar ist und überwacht wird.

Bei einer Ausgestaltung der Erfindung kann vorgesehen sein, dass die Detektionseinrichtung zu einer Ansteuerung eines ID-Pins eines, insbesondere des bereits erwähnten, Mikrocontrollers eingerichtet ist. Von Vorteil ist dabei, dass ein Mikrocontroller mit USB-on-the-go-Kompatibilität an einer USB-Schnittstelle ohne USB-on-the-go-Funktionalität betreibbar ist. Bevorzugt ist die oder eine Detektionseinrichtung zur Belegung des ID-Pins des Mikrocontrollers in Abhängigkeit von einer Belegung des Spannungspins der USB-Schnittstelle eingerichtet.

Bei einer Ausgestaltung der Erfindung kann vorgesehen sein, dass die Detektionseinrichtung zur Simulation eines ID-Pins an der USB-Schnittstelle eingerichtet ist. Von Vorteil ist dabei, dass die USB-Schnittstelle nach Art einer USB-on-the-go-Schnittstelle betreibbar ist. Somit ist ein Mikrocontroller bei der elektronischen Schaltung verwendbar, der ein ID-Pin für eine USB-on-the-go-Schnittstelle aufweist. Dieses ID-Pin ist mit der Detektionseinrichtung ansteuerbar, um das Umschalten zwischen den Modi zu bewirken.

Bei einer Ausgestaltung der Erfindung kann vorgesehen sein, dass die elektronische Schaltung eine Schalteinrichtung aufweist, die zur Zu- und Abschaltung einer Versorgungsspannung an der USB-Schnittstelle eingerichtet ist. Von Vorteil ist dabei, dass die USB-Schnittstelle bei Bedarf zur Energieversorgung eines angeschlossenen USB-Teilnehmers einsetzbar ist.

Bei einer Ausgestaltung der Erfindung kann vorgesehen sein, dass die USB-Schnittstelle als USB-A-Buchse ausgebildet ist. Somit sind standardisierte USB-Massenspeicher, insbesondere USB-Sticks, außenseitig an die USB-Schnittstelle anschließbar.

Bei einer Ausgestaltung der Erfindung kann vorgesehen sein, dass die USB-Schnittstelle dicht in eine Gehäuseöffnung eingesetzt ist. Von Vorteil ist dabei, dass eine hohe Schutzart, beispielsweise mindestens IP67, erreichbar ist. Der Stellantrieb kann somit in rauen Umgebungsbedingungen störungsfrei betrieben werden. Die USB-Schnittstelle kann beispielsweise ausgegossen sein, um selbst ausreichend dicht zu sein. Bevorzugt ist die USB-Schnittstelle in derselben Schutzart wie das Gehäuse oder in einer höheren Schutzart ausgeführt.

Bei einer Ausgestaltung der Erfindung kann vorgesehen sein, dass die USB-Schnittstelle mit einer lösbaren Abdeckung abgedeckt ist. Von Vorteil ist dabei, dass ein mechanischer Schutz der USB-Schnittstelle nach außen erreichbar ist. Bevorzugt ist die Abdeckung schraubbar an einem Gehäuse befestigt. Von Vorteil ist dabei, dass mit einem Schraubgewinde ein dichter Abschluss der USB-Schnittstelle nach außen erreichbar ist. Dies erhöht die Dichtigkeit des Gehäuses im Bereich der USB-Schnittstelle nochmals.

Bei einer Ausgestaltung der Erfindung kann vorgesehen sein, dass die oder eine Detektionseinrichtung zur Erkennung, ob ein an die USB-Schnittstelle außenseitig angeschlossenes Speichermedium leer ist, eingerichtet ist. Von Vorteil ist dabei, dass automatisiert ein Auslesen von Parametern und/oder Zustandsvariablen auf das angeschlossene Speichermedium auslösbar ist. Dies verbessert die Gebrauchseigenschaften nochmals. Umgekehrt kann auch vorgesehen sein, dass die oder eine Detektionseinrichtung zur Erkennung, ob ein an die USB-Schnittstelle außenseitig angeschlossenes Speichermedium einen bestimmten Datentyp enthält, eingerichtet ist. Bei Detektion dieses Datentyps, beispielsweise einer Firmware oder eines Parametersatzes, kann die Detektionseinrichtung zur Auslösung einer vorbestimmten Aktion, beispielsweise einem Laden des Inhalts des Speichermediums oder des Datentyps in eine Speichereinheit des Stellantriebs und/oder einem Ausführen des Datentyps, eingerichtet sein.

Bei einer Ausgestaltung der Erfindung kann vorgesehen sein, dass eine Freigabeeinrichtung an die USB-Schnittstelle angeschlossen ist. Somit kann eine Freigabe einer Bedienfunktion, beispielsweise einer Parametrierung und/oder einer Aktualisierung einer Firmware und/oder einer manuellen Betätigung, des Stellantriebs auslösbar sein.

Bei einer Ausgestaltung der Erfindung kann vorgesehen sein, dass die Freigabeeinrichtung zum Auslesen und Verifizieren einer in einem außenseitig an die USB-Schnittstelle angeschlossenen Speichermedium hinterlegten Autorisierungsinformation eingerichtet ist. Somit ist eine Freigabe von Bedienfunktionen durch die Freigabeeinrichtung ausführbar. Der Stellantrieb oder ein vorbestimmter Funktionsumfang des Stellantriebs sind somit gegen unbefugte Bedienungen, bei denen die Autorisierungsinformation nicht vorliegt, schützbar.

Die Erfindung wird nun anhand von Ausführungsbeispielen näher erläutert, ist jedoch nicht auf diese Ausführungsbeispiele beschränkt. Weitere Ausführungsbeispiele ergeben sich durch Kombination der Merkmale einzelner oder mehrerer Ansprüche untereinander und/der mit einzelnen oder mehreren Merkmalen der Ausführungsbeispiele.

Es zeigt:
- Fig. 1: eine Schnittdarstellung durch eine USB-Schnittstelle an einem erfindungsgemäßen Stellantrieb,
- Fig. 2: eine Prinzipdarstellung einer elektronischen Schaltung des erfindungsgemäßen Stellantriebs aus Fig. 1 und
- Fig. 3: eine Prinzipdarstellung eines weiteren erfindungsgemäßen Stellantriebs.

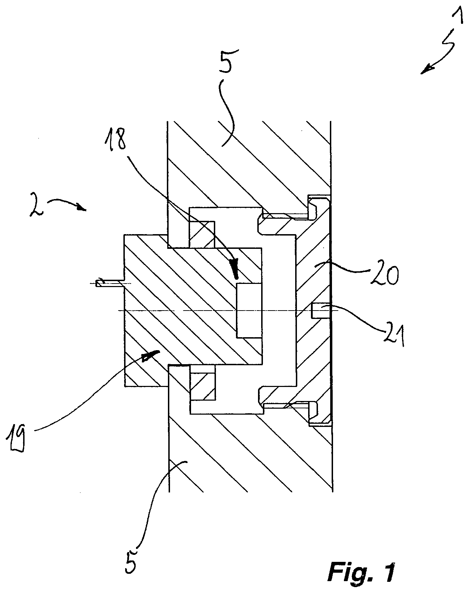

Fig. 1 zeigt einen Ausschnitt eines erfindungsgemäßen, im Ganzen mit 1 bezeichneten elektrischen Stellantriebs in Schnittdarstellung.

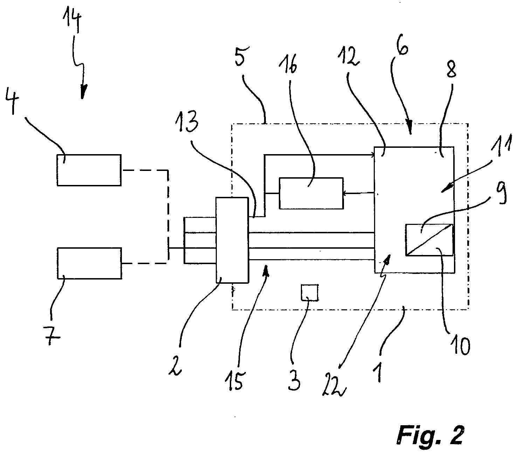

Fig. 2 zeigt den erfindungsgemäßen Stellantrieb 1 in einer Prinzipdarstellung als Bockschaltbild.

Im Folgenden werden die Fig. 1 und 2 gemeinsam beschrieben.

Der Stellantrieb 1 hat einen an sich bekannten, hier nicht weiter dargestellten Motor, mit welchem eine ebenfalls nicht weiter dargestellte Abtriebswelle antreibbar ist. An die Abtriebswelle ist ein nicht weiter dargestelltes und an sich bekanntes Ventil anschließbar.

Der Stellantrieb 1 hat eine USB-Schnittstelle 2, über welche Daten einer Speichereinheit 3 des Stellantriebs 1 auslesbar sind.

Diese Daten können Parameter, Zustandsvariablen und/oder ausführbare Programme (beispielsweise Firmware) oder andere Daten umfassen.

Zum Auslesen und Beschreiben dieser Daten ist ein USB-Host 4 an die USB-Schnittstelle 2 außenseitig, also außerhalb des Gehäuses 5 des Stellantriebs 1, anschließbar. Der USB-Host 4 kann beispielsweise ein PC sein.

An die USB-Schnittstelle 2 ist innenseitig, also innerhalb des Gehäuses 5 des Stellantriebs 1, eine elektronische Schaltung 6 angeschlossen.

Die elektronische Schaltung 6 ist in einem ersten Modus und einem zweiten Modus und gegebenenfalls in weiteren Modi betreibbar. Die elektronische Schaltung ist zwischen dem ersten Modus und dem zweiten Modus umschaltbar.

Im ersten Modus realisiert die elektronische Schaltung 6 einen USB-Host 9. Hierzu kann die elektronische Schaltung 6 einen USB-Master-Controller bereitstellen.

Im ersten Modus kann somit an die USB-Schnittstelle 3 außenseitig ein USB-Device 7 angeschlossen sein.

Die elektronische Schaltung 6 steuert dann das USB-Device 7, beispielsweise einen USB-Massenspeicher wie einen USB-Stick, zum Datenaustausch an.

Im zweiten Modus realisiert die elektronische Schaltung 6 ein USB-Device 10.

Im zweiten Modus ist somit ein außenseitig angeschlossenes USB-Device 7 nicht ansteuerbar.

Der zweite Modus dient dazu, den Anschluss des USB-Hosts 4 zu ermöglichen.

Die elektronische Schaltung 6 stellt den Inhalt der Speichereinheit 3 des Stellantriebs 1 an der USB-Schnittstelle 2 bereit.

Somit kann der USB-Host 4 auf den Dateninhalt der Speichereinheit 3 zugreifen und diesen auslesen und nach Bedarf verändern.

Die elektronische Schaltung 6 ist bei dem gezeigten Ausführungsbeispiel in einen Mikrocontroller 8 integriert.

Bei weiteren Ausführungsbeispielen ist die elektronische Schaltung 6 aus diskreten Bauelementen aufgebaut.

Die elektronische Schaltung 6 in Fig. 2 hat nicht weiter dargestellte Widerstände 11, die in einer ersten Beschaltung den USB-Host 9 und in einer zweiten Beschaltung das USB-Device 10 an der USB-Schnittstelle 2 in an sich bekannter Weise schaltungstechnisch richtig bereitstellen.

Die elektronische Schaltung 6 wechselt beim Übergang zwischen dem ersten Modus und dem zweiten Modus entsprechend zwischen der ersten Beschaltung und der zweiten Beschaltung.

Die elektronische Schaltung 6 weist eine Detektionseinrichtung 12 auf, mit welcher erkennbar ist, ob außenseitig an die USB-Schnittstelle 2 ein USB-Host 4 angeschlossen ist.

Hierzu überwacht die Detektionseinrichtung 12 ein Spannungspin 13 der USB-Schnittstelle 2.

Liegt an dem Spannungspin 13 von außen eine Spannung, zum Beispiel von 5V, an, so erkennt die Detektionseinrichtung 12, dass ein USB-Host 4 angeschlossen ist.

Die Detektionseinrichtung 12 bewirkt in diesem Fall einen Wechsel aus dem ersten Modus in den zweiten Modus. Die elektronische Schaltung 6 realisiert ein USB-Device 10, über welches der außenseitige USB-Host 4 auf die Speichereinheit 3 zugreifen kann.

Detektiert die Detektionseinrichtung 12 außenseitig den Anschluss eines USB-Teilnehmers 14, ohne dass von außen ein Spannungspegel am Spannungspin 13 anliegt, so erkennt die Detektionseinrichtung 12 ein angeschlossenes USB-Device 7.

Dementsprechend versetzt die Detektionseinrichtung 12 die elektronische Schaltung 6 in den zweiten Modus, in welchem die elektronische Schaltung 6 einen USB-Host 9 realisiert.

Der interne USB-Host 9 steuert nun als Master die Kommunikation mit dem externen USB-Device 7, beispielsweise um Daten des USB-Devices 7 in die interne Speichereinheit 3 zu laden.

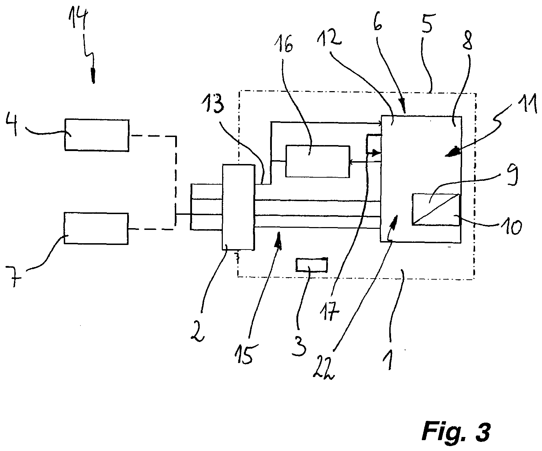

Bei einem weiteren Ausführungsbeispiel gemäß Fig. 3 ist der Mikrocontroller 8 zum Betreiben einer USB-on-the-go-Schnittstelle mit einem ID-Pin 17 ausgebildet. Durch Überwachung der USB-Schnittstelle 2 kann die Detektionsreinrichtung 12 feststellen, ob außenseitig ein USB-Host 4 oder ein USB-Device 7 angeschlossen ist, und den

ID-Pin 17 entsprechend ansteuern. Der Mikrocontroller 8 ist hierbei in an sich bekannter Weise zum Umschalten zwischen einem ersten Modus, in welchem er einen USB-Host 9 bereitstellt, und einem zweiten Modus, in welchem er ein USB-Device 10 bereitstellt, in Abhängigkeit von einer Belegung des ID-Pins 17 eingerichtet.

In jedem Fall erfolgt die Bus-Kommunikation über Datenleitungen 15.

Die Detektionseinrichtung 12 kann zur Simulation einer USB-on-the-go-Schnittstelle an der USB-Schnittstelle 2 eingerichtet sein. Hierzu kann die Detektionseinrichtung 12 zur Ansteuerung des erwähnten ID-Pins 17 eingerichtet sein.

Im Übrigen gelten die Ausführungen zu Fig. 1 und 2 bei dem Ausführungsbeispiel gemäß Fig. 3 entsprechend, wobei funktionell und/oder konstruktiv identische oder ähnliche Bauteile und Funktionsbausteine mit denselben Bezugszeichen bezeichnet sind.

Bei einem weiteren Ausführungsbeispiel ist die Detektionseinrichtung 12 zum zyklischen Umschalten zwischen dem ersten Modus, in welchem ein USB-Host 9 realisiert ist und dem zweiten Modus, in welchem ein USB-Device 10 realisiert ist, eingerichtet. Die Detektionseinrichtung 12 wechselt zwischen dem ersten Modus und dem zweiten Modus wiederkehrend, bis eine Kommunikation mit einem angeschlossenen USB-Teilnehmer 14 zustande gekommen ist, also beispielsweise aufgebaut ist. Hierzu ist die Detektionseinrichtung 12 zur Suche nach USB-Devices 7 im ersten Modus, also wenn ein USB-Host 9 realisiert ist, und zur Suche nach USB-Hosts 4 im zweiten Modus, also wenn ein USB-Device 10 realisiert ist, eingerichtet.

Jeweils nach einer festgelegten Zeitspanne ohne Verbindungsaufbau oder nach einer festgelegten Anzahl von erfolglosen Versuchen eines Verbindungsaufbaus oder eines Aufrufs ist die Detektionseinrichtung 12 zum Wechsel des Modus eingerichtet. Auf diese Weise wird ein zyklisches oder wiederkehrendes Umschalten erreicht.

Die Detektionseinrichtung 12 ist dadurch eingerichtet, dass eine Softwarefunktion zur Realisierung des Umschaltens und des Prüfens, ob ein USB-Teilnehmer 14 angeschlossen ist, durch Programmierung eingerichtet.

Bei dem Ausführungsbeispiel gemäß Fig. 2 ist eine Schalteinrichtung 16 ausgebildet, mit welcher eine Versorgungsspannung an den Spannungspin 13 der USB-Schnittstelle 2 anlegbar ist.

Diese Versorgungsspannung kann von dem Mikrocontroller 8 bereitgestellt sein.

In Fig. 1 ist erkennbar, dass die USB-Schnittstelle 2 als USB-A-Buchse 18 ausgebildet ist.

Die USB-Schnittstelle 2 ist somit dicht in eine Gehäuseöffnung 19 eingesetzt.

Eine Abdeckung 20 ist in das Gehäuse 5 eingeschraubt, um die USB-Schnittstelle 2 dicht nach außen abzuschließen.

In der eingeschraubten Position gemäß Fig. 1 fluchtet die Abdeckung 20 mit dem Gehäuse 5. Ein Ansatz 21 für ein Betätigungswerkzeug, zum Beispiel eine Münze, ermöglicht das Herausschrauben und Entfernen der Abdeckung 20. Der Ansatz 21 kann als schlitzförmige Ausnehmung oder als sonstiger Ansatz geformt sein.

Die USB-A-Buchse 18 ist mit einer Vergussmasse ausgegossen, um dicht zu sein.

Die Detektionseinrichtung 12 ist so eingerichtet, dass erkennbar ist, ob ein Speichermedium eines außenseitig angeschlossenen USB-Teilnehmers 14 leer ist oder Daten eines bestimmten Datentyps aufweist.

Ja nach erkannter Situation kann die Detektionseinrichtung 12 ein leeres Speichermedium mit dem Inhalt der Speichereinheit 3 beschreiben oder Daten von dem Speichermedium in die Speichereinheit 3 laden und dort gegebenenfalls ausführen.

In dem Mikrocontroller 8 ist eine Freigabeeinrichtung 22 ausgebildet, mit welcher einzelne Bedienfunktionen des Stellantriebs 1 sperrbar und freigebbar sind.

Hierzu kann die Freigabeeinrichtung 22 über die Datenleitungen 15 und die USB-Schnittstelle 2 auf einen angeschlossenen USB-Teilnehmer 14, zum Beispiel einen USB-Host 4 oder ein USB-Device 7 oder einen USB-on-the-go-fähigen USB-Teilnehmer 14, zugreifen.

Ist in dem USB-Teilnehmer 14 eine vorbestimmte Autorisierungsinformation, beispielsweise ein Passwort oder eine Kennnummer oder eine sonstige Zeichenfolge, hinterlegt, so gibt die Freigabeeinrichtung 22 die zugehörige Bedienfunktion frei, beispielsweise solange der USB-Teilnehmer 14 an der USB-Schnittstelle 2 angeschlossen ist.

Die Freigabeeinrichtung 22 kann hierbei derart eingerichtet sein, dass nach einer Trennung des USB-Teilnehmers 14 von der USB-Schnittstelle 2, was durch die Detektionseinrichtung 12 detektierbar ist, die zugehörige Bedienfunktion wieder gesperrt ist.

Bei weiteren Ausführungsbeispielen ist ein nichtelektrischer, beispielsweise ein pneumatischer oder hydraulischer oder mechanischer, Stellantrieb mit den hier beschriebenen Merkmalen ausgebildet.

Bei einem Stellantrieb 1 wird vorgeschlagen, eine umschaltbare elektronische Schaltung 6 auszubilden, mit welcher an einer USB-Schnittstelle 2 wahlweise ein USB-Host 9 und ein USB-Device 10 realisierbar ist.

## Patentansprüche

1. Stellantrieb (1), wobei eine USB-Schnittstelle (2) ausgebildet ist, über welche Parameter und/oder Zustandsvariablen des Stellantriebs (1) auslesbar und/oder veränderbar sind, **dadurch gekennzeichnet, dass** die USB-Schnittstelle (2) dicht nach einer Schutzart von mindestens IP 67 in eine Gehäuseöffnung (19) eingesetzt ist, wobei mit an die USB-Schnittstelle (2) eine elektronische Schaltung (6) angeschlossen ist, die zumindest zwischen einem ersten Modus und einem zweiten Modus schaltbar ist, und die elektronische Schaltung (6) an der USB-Schnittstelle (2) im ersten Modus einen USB-Host (9) und im zweiten Modus ein USB-Device (10) bereitstellt.

2. Stellantrieb (1) nach Anspruch 1, **dadurch gekennzeichnet, dass** der Stellantrieb (1) als elektrischer Stellantrieb ausgebildet ist.

3. Stellantrieb (1) nach Anspruch 1 oder 2, **dadurch gekennzeichnet, dass** die elektronische Schaltung (6) in einen Mikrocontroller (8) integriert ist.

4. Stellantrieb (1) nach einem der Ansprüche 1 bis 3, **dadurch gekennzeichnet, dass** die elektronische Schaltung (6) Widerstände (11) aufweist, die im ersten Modus in einer ersten Beschaltung und im zweiten Modus in einer zweiten Beschaltung mit der USB-Schnittstelle (2) verbunden sind.

5. Stellantrieb (1) nach einem der Ansprüche 1 bis 4, **dadurch gekennzeichnet, dass** eine Detektionseinrichtung (12) ausgebildet ist, mit welcher erkennbar ist, ob außenseitig an die USB-Schnittstelle (2) ein USB-Host (4) oder ein USB-Device (7) angeschlossen ist, und/oder dass die Detektionseinrichtung (12) zu einer Überwachung eines Spannungspins (13) der USB-Schnittstelle (2) eingerichtet ist.

6. Stellantrieb (1) nach einem der Ansprüche 1 bis 5, **dadurch gekennzeichnet, dass** ein Wechsel zwischen dem ersten Modus und dem zweiten Modus mit der Detektionseinrichtung (12) bewirkbar ist.

7. Stellantrieb (1) nach einem der Ansprüche 1 bis 6, **dadurch gekennzeichnet, dass** die oder eine Detektionseinrichtung (12) zum zyklischen oder wiederkehrenden Umschalten zwischen dem ersten Modus und dem zweiten Modus, bis eine Kommunikation mit einem außenseitig an die USB-Schnittstelle (2) angeschlossenen USB-Teilnehmer (14) aufgebaut ist, eingerichtet ist.

8. Stellantrieb (1) nach einem der Ansprüche 1 bis 7, **dadurch gekennzeichnet, dass** die USB-Schnittstelle (2) als USB-on-the-go-Schnittstelle ausgebildet ist und/oder dass die Detektionseinrichtung (12) zu einer Ansteuerung eines ID-Pins (17) des oder eines Mikrocontroller (8) eingerichtet ist.

9. Stellantrieb (1) nach einem der Ansprüche 1 bis 8, **dadurch gekennzeichnet, dass** die Detektionseinrichtung (12) zur Simulation eines ID-Pins (17) an der USB-Schnittstelle (2) eingerichtet ist und/oder dass eine Schalteinrichtung (16) zur Zu- und Abschaltung einer Versorgungsspannung an der USB-Schnittstelle (2) eingerichtet ist.

10. Stellantrieb (1) nach einem der Ansprüche 1 bis 9, **dadurch gekennzeichnet, dass** die USB-Schnittstelle (2) als USB-A-Buchse (18) ausgebildet ist.

11. Stellantrieb (1) nach einem der Ansprüche 1 bis 10, **dadurch gekennzeichnet, dass** die USB-Schnittstelle (2) mit einer lösbaren, vorzugsweise schraubbaren, Abdeckung (20) abgedeckt ist.

12. Stellantrieb (1) nach einem der Ansprüche 1 bis 11, **dadurch gekennzeichnet, dass** die oder eine Detektionseinrichtung (12) zur Erkennung, ob ein an die USB-Schnittstelle (2) außenseitig angeschlossenes Speichermedium leer ist, eingerichtet ist.

13. Stellantrieb (1) nach einem der Ansprüche 1 bis 12, **dadurch gekennzeichnet, dass** eine Freigabeeinrichtung (22) an die USB-Schnittstelle (2) angeschlossen ist und/oder dass die Freigabeeinrichtung (22) zum Auslesen und Verifizieren einer in einem außenseitig an die USB-Schnittstelle (2) angeschlossenen Speichermedium hinterlegten Autorisierungsinformation eingerichtet ist.

## Claims

1. Actuator (1), wherein a USB interface (2) is formed, via which parameters and/or state variables of the actuator (1) can be read out and/or changed, **characterised in that** the USB interface (2) is inserted tightly according to a type of protection of at least IP 67 into a housing opening (19), wherein the USB interface (2) has an electronic circuit (6) connected thereto which can be switched at least between a first mode and a second mode, and the electronic circuit (6) at the USB interface (2) provides a USB host (9) in the first mode and provides a USB device (10) in the second mode.

2. Actuator (1) as claimed in claim 1, **characterised in that** the actuator (1) is formed as an electrical actuator.

3. Actuator (1) as claimed in claim 1 or 2, **characterised in that** the electronic circuit (6) is integrated into a microcontroller (8).

4. Actuator (1) as claimed in any one of claims 1 to 3, **characterised in that** the electronic circuit (6) has resistors (11) which are connected to the USB interface (2) in a first circuit arrangement in the first mode and in a second circuit arrangement in the second mode.

5. Actuator (1) as claimed in any one of claims 1 to 4, **characterised in that** a detection device (12) is formed, by means of which it is possible to detect whether a USB host (4) or a USB device (7) is connected externally to the USB interface (2), and/or that the detection device (12) is arranged to monitor a voltage pin (13) of the USB interface (2).

6. Actuator (1) as claimed in any one of claims 1 to 5, **characterised in that** a change between the first mode and the second mode can be effected by the detection device (12).

7. Actuator (1) as claimed in any one of claims 1 to 6, **characterised in that** the or a detection device (12) is arranged to cyclically or recurrently switch between the first mode and the second mode until a communication is established with a USB subscriber (14) connected externally to the USB interface (2).

8. Actuator (1) as claimed in any one of claims 1 to 7, **characterised in that** the USB interface (2) is formed as a USB-on-the-go interface and/or that the detection device (12) is arranged to activate an ID pin (17) of the or a microcontroller (8).

9. Actuator (1) as claimed in any one of claims 1 to 8, **characterised in that** the detection device (12) is arranged to simulate an ID pin (17) on the USB interface (2) and/or that a switching device (16) is arranged to switch a supply voltage at the USB interface (2) on and off.

10. Actuator (1) as claimed in any one of claims 1 to 9, **characterised in that** the USB interface (2) is formed as a USB-A jack (18).

11. Actuator (1) as claimed in any one of claims 1 to 10, **characterised in that** the USB interface (2) is covered by a detachable, preferably screwable, cover (20).

12. Actuator (1) as claimed in any one of claims 1 to 11, **characterised in that** the or a detection device (12) is arranged to detect whether a storage medium connected externally to the USB interface (2) is empty.

13. Actuator (1) as claimed in any one of claims 1 to 12, **characterised in that** an enabling device (22) is connected to the USB interface (2) and/or that the enabling device (22) is arranged to read out and verify an item of authorisation information stored in a storage medium connected externally to the USB interface (2).

## Revendications

1. Mécanisme de commande (1), dans lequel est formée une interface USB (2), par laquelle des paramètres et/ou des variables d'état du mécanisme de commande (1) peuvent être lu(e)s et/ou changé(e)s, **caractérisé en ce que** l'interface USB (2) est insérée dans une ouverture de boîtier (19) de façon étanche selon un mode de protection d'au moins IP 67, dans lequel un circuit électronique (6) est raccordé à l'interface USB (2), qui peut être commuté au moins entre un premier mode et un deuxième mode, et le circuit électronique (6) procure à l'interface USB (2) dans le premier mode un hôte USB (9) et dans le deuxième mode un dispositif USB (10).

2. Mécanisme de commande (1) selon la revendication 1, **caractérisé en ce que** le mécanisme de commande (1) est constitué par un mécanisme de commande électrique.

3. Mécanisme (1) selon la revendication 1 ou 2, **caractérisé en ce que** le circuit électronique (6) est intégré dans un microcontrôleur (8).

4. Mécanisme de commande (1) selon l'une quelconque des revendications 1 à 3, **caractérisé en ce que** le circuit électronique (6) présente des résistances (11), qui sont reliées à l'interface USB (2) dans le premier mode selon une première connexion et dans le deuxième mode selon une deuxième connexion.

5. Mécanisme de commande (1) selon l'une quelconque des revendications 1 à 4, **caractérisé en ce qu'**un dispositif de détection (12) est réalisé, avec lequel on peut voir si un hôte USB (4) ou un dispositif USB (7) est raccordé extérieurement à l'interface USB (2), et/ou **en ce que** le dispositif de détection (12) est conçu pour une surveillance d'une broche de tension (13) de l'interface USB (2).

6. Mécanisme de commande (1) selon l'une quelconque des revendications 1 à 5, **caractérisé en ce qu'**un changement entre le premier mode et le deuxième mode peut être provoqué avec le dispositif de détection (12).

7. Mécanisme de commande (1) selon l'une quelconque des revendications 1 à 6, **caractérisé en ce que** le ou un dispositif de détection (12) est conçu pour la commutation cyclique ou répétitive entre le premier mode et le deuxième mode, jusqu'à ce qu'une communication soit établie avec un utilisateur USB (14) raccordé extérieurement à l'interface USB (2).

8. Mécanisme de commande (1) selon l'une quelconque des revendications 1 à 7, **caractérisé en ce que** l'interface USB (2) est configurée comme une interface USB-on-the-go et/ou **en ce que** le dispositif de détection (12) est conçu pour une commande d'une broche ID (17) du ou d'un microcontrôleur (8).

9. Mécanisme de commande (1) selon l'une quelconque des revendications 1 à 8, **caractérisé en ce que** le dispositif de détection (12) est conçu pour la simulation d'une broche ID (17) sur l'interface USB (2) et/ou **en ce qu'**un dispositif de commutation (16) est conçu pour la connexion et la déconnexion d'une tension d'alimentation à l'interface USB (2).

10. Mécanisme de commande (1) selon l'une quelconque des revendications 1 à 9, **caractérisé en ce que** l'interface USB (2) est configurée comme une douille USB-A (18).

11. Mécanisme de commande (1) selon l'une quelconque des revendications 1 à 10, **caractérisé en ce que** l'interface USB (2) est recouverte d'un couvercle amovible (20), de préférence à visser.

12. Mécanisme de commande (1) selon l'une quelconque des revendications 1 à 11, **caractérisé en ce que** le ou un dispositif de détection (12) est conçu pour voir si un moyen de mémoire raccordé extérieurement à l'interface USB (2) est vide.

13. Mécanisme de commande (1) selon l'une quelconque des revendications 1 à 12, **caractérisé en ce qu'**un dispositif de libération (22) est raccordé à l'interface USB (2) et/ou **en ce que** le dispositif de libération (22) est conçu pour lire et vérifier une information d'autorisation stockée dans un moyen de mémoire raccordé extérieurement à l'interface USB (2).
